(19) Europäisches Patentamt
European Patent Office
Office européen des brevets

(11) **EP 1 618 944 B1**

(12) **EUROPEAN PATENT SPECIFICATION**

(45) Date of publication and mention
of the grant of the patent:
**12.11.2008 Bulletin 2008/46**

(51) Int Cl.:
***B01D 53/94*** *(2006.01)*  ***B01J 23/00*** *(2006.01)*
***C04B 35/50*** *(2006.01)*

(21) Application number: **05015758.5**

(22) Date of filing: **20.07.2005**

(54) **Exhaust gas purification catalyst comprising perovskite complex oxide as support**

Abgasreinigungskatalysator mit Perowskit Komplexoxid als Träger

Catalyseur pour la purification de gaz d'échappement comprenant un oxide complexe pérovskite comme support

(84) Designated Contracting States:
**DE FR GB**

(30) Priority: **23.07.2004 JP 2004215125**

(43) Date of publication of application:
**25.01.2006 Bulletin 2006/04**

(73) Proprietor: **DOWA Electronics Materials Co., Ltd.**
**Chiyoda-ku**
**Tokyo 101-0021 (JP)**

(72) Inventor: **Suda, Hisashi**
**Chiyoda-ku,**
**Tokyo 100-8282 (JP)**

(74) Representative: **Wagner, Karl H.**
**Wagner & Geyer Partnerschaft**
**Patent- und Rechtsanwälte**
**Gewürzmühlstrasse 5**
**80538 München (DE)**

(56) References cited:
**EP-A- 0 525 677**    **EP-A- 1 462 428**
**US-A- 4 126 580**    **US-A- 4 921 829**

**Description**

BACKGROUND OF THE INVENTION

Field of the Invention:

This invention relates to a high exhaust gas purification catalyst obtained by supporting a noble metal element on a perovskite complex oxide, this catalyst preferably used for vehicles.

Background Art:

Concern about vehicle exhaust gas as one source of air polluting substances emerged in the late 1960s. This prompted research into purification technologies that in one aspect led to the development and practical application of vehicle exhaust gas purification catalysts from 1975. Today, such catalysts are used in almost all vehicles in Japan and the United States and are rapidly being applied in the EU and around the globe. As a result, such catalysts have established themselves as environmental purification catalysts.

The mainstream in catalysts for purifying vehicle exhaust gas is the three-way catalyst for simultaneously oxidizing or reducing the air polluting substances contained in exhaust gas, namely hydrocarbons (HC), carbon monoxide (CO) and nitrogen oxides (NOx). The three-way catalytic converter is composed of a honeycomb substrate coated with γ-alumina of high specific surface area and one or more noble metal activators such as Pt, Pd and Rh carried on the coating, and is further added with Cc oxide or other such substance exhibiting good oxygen absorption/desorption performance.

In the 1990s, midst rising concern about global environmental changes, a need was felt for further technological innovation in the field of exhaust gas purification catalysts for vehicles. Against this backdrop, numerous efforts have been directed to the development of novel catalyst materials by applying perovskite complex oxides to exhaust gas purification catalysts for vehicles. Examples that can be found in patent literature include JP 102016813, JP 2620624B, JP 1877483B, JP 3222184B, JP 9-86928A, JP 11-169711A, JP 8-12334A and JP 2004-41866A.

EP-A-1 462 428, EP-A-0 525 677, US-A-4 921 829 and US-A-4 126 580 disclose perovskite oxides for exhaust gas purification catalysts.

SUMMARY OF THE INVENTION

In spite of these efforts, however, inadequacies still remain regarding purification performance, the productivity of perovskite complex oxide itself and the like, so that wide practical application has not yet been achieved. Moreover, the fact that exhaust gas purification catalysts are by nature generally low in purification efficiency at low temperatures has prompted vehicle manufacturers to implement measures for improving purification efficiency immediately after engine starting, such as by positioning the catalyst as far toward the upstream end of the exhaust gas flow passage as possible and giving the exhaust gas flow passage a double-wall structure so as maintain the temperature of the exhaust gas until it reaches the catalyst. But such measures restrict vehicle design freedom and increase the cost of the exhaust gas flow passage components. A strong need is therefore felt for a technology for improving the catalyst's own purification efficiency in the low-temperature region.

An object of the present invention is therefore to develop and provide a functional material capable of enabling an improvement in harmful gas component removal efficiency in the relatively low-temperature region and also to provide an excellent exhaust gas purification catalyst using the material.

As can be seen in the patent literature referred to above, the development of perovskite complex oxide catalysts has up to now centered on studies into the components and composition of the catalyst per se and studies into noble metals and heat-resistant oxides for combination therewith, and little attention has been focused on the physical properties of perovskite complex oxides.

Through an in-depth investigation into the physical properties of perovskite complex oxides, the inventors discovered for example that among perovskite complex oxides obtained by direct heating production from noncrystalline material i.e. amorphous material it is possible to realize ones exhibiting extremely high activity. When such a perovskite complex oxide is used in a catalyst, the high activity possessed by the complex oxide per se enables improvement of catalytic activity starting from relatively low temperatures, so that it greatly improves exhaust gas purification performance in the low-temperature region. The high activity of these perovskite complex oxides is thought to be attributable to the fact that the oxygen atom detachment phenomenon occurs vigorously from a low temperature and it was learned that the characteristics of the activity can be ascertained by thermogravimetry (TG-DTA). The present invention was accomplished based on these findings.

The present invention provides an exhaust gas purification catalyst as set forth in claim 1. Claim 2 describes a preferred embodiment of the inventive catalyst.

The invention provides an exhaust gas purification catalyst comprising a noble metal element supported on a perovskite complex oxide.

A perovskite complex oxide is provided whose ratio of thermogravimetric weight decrease between 50 °C and 180 °C to thermogravimetric weight decrease between 50 °C and 1000 °C is not less than 30 % and which is excellent for use as a catalyst carrier for supporting noble metal elements.

Thermogravimetry is a method for analyzing weight change of a specimen when it is heated. The measured value of weight change used here in the description of the invention is that at a temperature increase rate of 20°C/minute in an air atmosphere.

Specifically, a weight change curve is recorded while raising the temperature of the specimen from 50 °C to 1000 °C under the aforesaid conditions, the weight decrease $a$ (g) between 50 °C and 180 °C and the weight decrease $b$ (g) between 50 °C and 1000°C are read from the curve, and a specimen for 20 which a/b x 100 $\geq$ 30 is defined as falling within the present invention. The same results are obtained when the rates of decrease (%) relative to the original weight are used as the values of $a$ and b.

The perovskite complex oxide can contain one or more rare earth element species and one or more transition metal elements. Among perovskite complex oxides represented by structural formula $RTO_3$, ones in which R is constituted by one or more rare earth element species and T is constituted by one or more transition metal elements, and ones in which R is constituted by one or more rare earth element species and one or more members selected from the group comprising alkali metal elements and alkali earth metal elements and T is constituted by one or more transition metal elements are excellent for use. The latter of these has a structure in which the rare earth element species constituting the former are partially replaced by one or more elements selected from among alkali metal elements and alkali earth metal elements.

A "rare earth element species" is defined as a member of the group of elements obtained by adding Y to the rare earth elements.

The perovskite complex oxide has high activity at a relatively low temperature. Use of this perovskite complex oxide in an exhaust gas purification catalyst for vehicles improves the purification efficiency of CO gas and the like in the relatively low temperature region immediately after engine starting and mitigates the need to implement various measures for preventing temperature decrease of the exhaust gas reaching the catalyst. The present invention therefore contributes to wide use of exhaust gas purification catalysts of high practical value.

BRIEF DESCRIPTION OF THE DRAWING

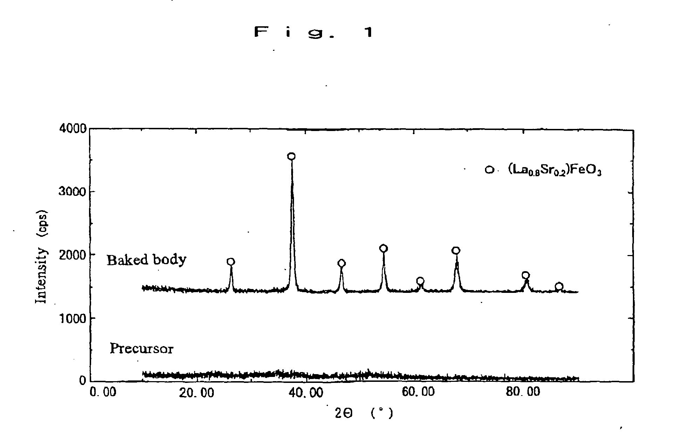

Figure 1 is a chart showing the X-ray diffraction patterns of a noncrystalline (amorphous) precursor and a perovskite complex oxide according to a first embodiment.

DESCRIPTION OF THE PREFERRED EMBODIMENTS

The inventors discovered through experimentation that a perovskite complex oxide of any given composition experiences a difference in catalytic activity when a baked (firing) body thereof is made to support Pd or the like. Further, a perovskite complex oxide exhibiting high catalytic activity has a marked effect toward improving catalytic activity particularly in the low-temperature region.

The inventors conducted a wide range of studies regarding the relationship between the physical properties of a perovskite complex oxide and the exhaust gas purification efficiency of a catalyst using it. As a result, it was found that a correlation exists between thermogravimetric weight decrease during temperature rise and exhaust gas purification property. Moreover, it was ascertained that a perovskite complex oxide exhibiting large thermogravimetric weight decrease in the low-temperature region produces a large effect toward improving exhaust gas purification efficiency at low temperature immediately after engine starting.

Specifically, when a perovskite complex oxide whose ratio of thermogravimetric weight decrease between 50 °C and 180 °C to thermogravimetric weight decrease between 50 °C and 1000 °C (weight decrease ratio) is not less than 30 % is used in a catalyst, the exhaust gas purification capability immediately after engine starting, particularly the CO gas purification performance, is markedly improved. The measured value of weight change used here can be that obtained when the thermogravimetry is carried out by raising the specimen temperature at an increase rate of 20 °C/minute in an air atmosphere.

The mechanism by which a perovskite complex oxide that has the foregoing large thermogravimetric weight decrease ratio in the low-temperature region improves the exhaust gas purification efficiency immediately after engine starting has not been elucidated in a number of aspects but the following is conceivable. Some of the oxygen atoms in the crystal lattice of the perovskite complex oxide detach in the course of temperature rise. In the case of a perovskite complex oxide with a large weight decrease ratio in the low-temperature region, the oxygen atom detachment phenomenon probably occurs vigorously in the low-temperature region. The fact that the oxygen atom detachment phenomenon readily occurs (i.e., reduction readily occurs) means that oxidizing power increases in that temperature region. This increase in oxidizing power becomes a factor that causes an increase in catalytic activity. From this it follows that exhaust gas purification performance should improve particularly in the course of temperature increase in the relatively low temperature region immediately after engine starting.

A perovskite complex oxide that has the foregoing large thermogravimetric weight decrease ratio in the low-temperature region is optimally realized when the composition of the perovskite complex oxide contains one or more rare earth element species and one or more transition metal elements. For example, in the general formula $RTO_3$ of perovskite complex oxides, R can be composed of one or more rare earth element species and T can be composed of one or more transition metal elements. Otherwise, R can be composed of one or more rare earth element species and one or more members selected from the group comprising alkali metal elements and alkali earth metal elements and T can be composed of one or more transition metal elements.

The rare earth element species constituting R can be, but is not particularly limited to, Y, La, Ce, Nd, Sm, Pr or the like. The transition metal element constituting T can be, but is not particularly limited to, Co, Fe, Ni, Mn, Cu, Cr, V, Nb, Ti, Zr, Pt, Pd, Ru, Rh, Au, Ag or the like. As elements other than rare earth element species that can constitute R can be exemplified alkali metal elements and alkali earth metal elements contained in the manner of partially replacing the rare earth element species. Such elements include Li, K, Na, Mg, Sr, Ca, Ba and so on.

The conventional method generally used for production of perovskite complex oxides is by synthesis from an intermediate substance such as a hydroxide, carbonate, oxalate, citrate, cyanate, oxide or the like. However, it was found that a perovskite complex oxide having a large weight decrease ratio in the low-temperature region could not be produced from such a crystalline intermediate substance. Through a series of in-depth experiments, the inventors discovered that a perovskite complex oxide that has a large weight decrease ratio and exhibits excellent catalytic activity in the low-temperature region can be produced without going through the foregoing crystalline intermediate substance by synthesis directly from a noncrystalline (amorphous) precursor under low-temperature, short-time heating conditions.

More specifically, the perovskite complex oxide capable of imparting excellent catalytic activity according the present invention can be produced from a precursor that is a powdery amorphous substance containing R elements and T elements by low-temperature heat treatment. The precursor is, for example, an amorphous substance having at least one rare earth element species and at least one transition metal element as it principal constituent components and containing R and T components at the weight ratio required for producing the desired complex oxide. The X-ray diffraction pattern therefore remains broad with no distinct peak. The amorphous substance preferably maintains its amorphous state up to the heat-treatment temperature for obtaining the perovskite complex oxide.

Such an amorphous precursor can be obtained by reacting an aqueous solution containing R element and T element ions and a precipitant composed of alkali carbonate or carbonates containing ammonium ions or the likes at a reaction temperature not higher than 60 °C and a pH of 6 or higher to produce a precipitated product and drying the filter cake thereof.

More specifically, first an aqueous solution is prepared that contains nitrate, sulfate, chloride or other water-soluble mineral salt of R and nitrate, sulfate, chloride or other water-soluble mineral salt of T dissolved at a mole ratio of R element(s) and T element(s) of approximately 1 : 1. Although the R element and T element mole ratio is ideally about 1 : 1, a perovskite complex oxide can be formed even if the mole ratio is not exactly 1 : 1. The R element to T element mole ratio can therefore deviate somewhat from 1 : 1 insofar as it is a value enabling formation of perovskite complex oxide. The R element(s) may include two or more components and the T element(s) may also include two or more components. In such case, it suffices to dissolve the components so that ratio of the total number of moles of the elements constituting R and the total number of moles of the elements constituting T is approximately 1 : 1.

Heat-resistant materials, including materials such as alumina, silica, titania and zirconia and complex oxides thereof, can be added to the precursor within a range that does not impair the effect of the invention. In such case, if the precursor is heat-treated together with these substances, there can be obtained a heat-resistant material incorporating perovskite complex oxide interstitially.

The upper limit of R and T ion concentration in the solution for producing the precipitate is determined by the solubility of the salts used but is preferably such that no crystalline compounds of R and/or T precipitate. Ordinarily, the total ion concentration of R and T is preferably in the range of around 0.01 - 0.60 mole/L but in some cases may exceed 0.60 mole/L.

The amorphous precipitate can be obtained from this solution by using a precipitant composed of alkali carbonate or carbonates containing ammonium ions or the like. As such a precipitant can be used sodium carbonate, sodium hydrogencarbonate, ammonium carbonate, ammonium hydrogencarbonate or the like. A base such as sodium hydroxide or ammonia can be added as required. Moreover, an amorphous precursor appropriate for the perovskite complex oxide of this invention can also be produced by forming a precipitate using sodium hydroxide, ammonium or the like and then blowing carbon dioxide gas into the aqueous phase containing the precipitate. When producing the amorphous precipitate, the pH of the solution should be controlled to fall in the range of 6 - 11. A pH in the region below 6 is inappropriate because the rare earth element species constituting R may sometimes not form a precipitate. On the other hand, when the pH is in the region above 11, the amorphousness of the precipitate formed in the case of a precipitant only may not proceed thoroughly, so that a hydroxide or other crystalline precipitate may form. Further, the reaction temperature should be made not higher than 60 °C. At a temperature exceeding 60 °C, R and/or T crystalline compound particles may form, which is preferably avoided because it hinders formation of the amorphous precursor.

Preferably, the produced precipitate is solid-liquid separated by filtration, centrifugal precipitation, decantation or the like, and washed with water to reduce the amount of residual impurity ions. The obtained amorphous precipitate is dried by spontaneous drying, heat drying or vacuum drying of the like and, when necessary, the dried product is subjected to crushing and classification. The so-obtained amorphous substance is excellent for use as a precursor for obtaining a perovskite complex oxide having a large weight decrease ratio.

The perovskite complex oxide of this invention is directly synthesized by heat treatment of this amorphous precursor. The heat-treatment temperature needs to be raised to 450 °C or higher because perovskite complex oxide does not readily form at too low a temperature. It is preferably made 500 °C or higher. On the other hand, the weight decrease ratio of the product decreases when the heat-treatment temperature is too high, so that the temperature is preferably set at 1000 °C or lower, preferably 800 °C or lower, more preferably 700 °C or lower. The heat-treatment atmosphere can be air or an oxidizing atmosphere, or can be a nitrogen or other atmosphere having an oxygen concentration and temperature within the ranges enabling production of perovskite complex oxide.

When a noble metal element is supported on the a baked body of the perovskite complex oxide of large weight decrease ratio at low temperature obtained in this manner, there is obtained a catalyst of excellent catalytic activity in the low-temperature region that exhibits excellent exhaust gas purification performance at low temperature immediately after engine starting. Moreover, when a noble metal element such as Pt, Pd or Rh that can function as an activator is incorporated in the T element of the $RTO_3$ structure, the perovskite complex oxide itself can function as a catalyst exhibiting an excellent weight decrease ratio. It is also effective to incorporate a noble metal element such as Pt, Pd or Rh in the T element and then use the result as a carrier on which a noble metal element is supported.

Examples

Example 1

Lanthanum nitrate, strontium nitrate and ferric nitrate were mixed to obtain a mole ratio of elemental lanthanum to elemental strontium to elemental iron of 0.8 : 0.2 : 1. A starting solution was prepared by adding this mixture to water to make the total molar concentration of elemental lanthanum, elemental strontium and elemental iron present in the solution 0.2 mole/L. The temperature of the solution was adjusted to 25 °C under stirring. At the point the temperature reached 25 °C, addition of ammonium carbonate solution as precipitant was continued until the pH had been adjusted to 8. Next, precipitation was allowed to progress thoroughly by continuous stirring of the solution for 12 hours with the reaction temperature maintained at 25 °C. The precipitate obtained was harvested by filtering, washed with water, and dried at 110 °C. The so-obtained powder was called a precursor powder.

The precursor powder was subjected to X-ray powder diffraction. From the fact that, as shown in Figure 1, a broad diffraction result with no peaks was obtained, the precursor powder was confirmed to be an amorphous material.

Next, the precursor powder was baked by heat-treatment in an air atmosphere at 600 °C. As shown in Figure 1, the baked product was found by X-ray powder diffraction (using Co-K alpha rays) to be a perovskite complex oxide single phase of $(La_{0.8}Sr_{0.2})FeO_3$.

A baked body of the perovskite complex oxide was subjected to thermogravimetry. A Seiko Instrumental Inc. EXSTAR 6000 was used for the measurement, which was carried out under the conditions of an air atmosphere, temperature increase rate of 20 °C/min, sample weight of 10 mg, measurement temperature range of 50 - 1000 °C, and sampling interval of 2 sec. Under these measurement conditions, the percentage of the weight decrease between 50 and 1000 °C accounted for by weight decrease between 50 - 180 °C (the weight decrease ratio) was calculated as:

$$\text{Weight decrease ratio (\%)} = [\text{weight decrease (g) between } 50 - 180\,°C] / [\text{weight decrease (g) between } 50 - 1000\,°C] \times 100.$$

The weight decrease ratio of the perovskite complex oxide by this calculation was found to be 34.8%.

Example 2

Example 1 was repeated except that lanthanum nitrate and ferric nitrate were mixed to obtain a mole ratio of elemental lanthanum to elemental iron of 1 : 1.

The baked product obtained was found by X-ray powder diffraction to be a perovskite complex oxide single phase of $LaFeO_3$.

The perovskite complex oxide was found by thermogravimetry to have a weight decrease ratio of 32.5%.

Example 3

Example 1 was repeated except that lanthanum nitrate, strontium nitrate and manganese nitrate were mixed to obtain a mole ratio of elemental lanthanum to elemental strontium to elemental manganese of 0.8 : 0.2 : 1.

The baked product obtained was found by X-ray powder diffraction to be a perovskite complex oxide single phase of $(La_{0.8}Sr_{0.2})MnO_3$.

The perovskite complex oxide was found by thermogravimetry to have a weight decrease ratio of 33.8%.

Comparative Example 1

A perovskite complex oxide was produced by the coprecipitation process, one of the methods commonly used for producing complex oxides.

A precipitate was formed in the same manner as in Example 1 except that addition of sodium hydroxide as precipitant was continued until the pH had been adjusted to 12. The precipitate was filtered, washed with water and dried to obtain a precursor powder. The precursor powder was baked by heat treatment at 600 °C in air but no perovskite complex oxide single phase was obtained. When products produced at progressively higher heat-treatment temperatures were examined by X-ray powder diffraction, it was found that a baked body of $(La_{0.8}Sr_{0.2})FeO_3$ was obtained when the heat treatment was conducted at 900 °C. The baking temperature was therefore set at 900 °C in this comparative example.

The perovskite complex oxide of $(La_{0.8}Sr_{0.2})FeO_3$ obtained at the baking temperature of 900 °C was found by thermogravimetry to have a weight decrease ratio of 24.6%.

Comparative Example 2

A perovskite complex oxide was produced by the citric acid complex process, one of the methods commonly used for producing complex oxides.

As in Example 2, lanthanum nitrate and ferric nitrate were mixed to obtain a mole ratio of elemental lanthanum to elemental iron of 1 : 1. This mixture was added to water to make the total molar concentration of elemental lanthanum and elemental iron present in the solution 0.2 mole/L. Citric acid was added to the solution at 1.2 fold relative to the total molar concentration of elemental lanthanum and elemental iron to obtain a starting solution.

The starting solution was maintained under reduced pressure in a rotary evaporator and evaporated to dryness over about 3 hours in an 80 °C hot bath to produce a citric acid complex as a precursor powder.

The obtained precursor powder was baked by heat-treatment in an air atmosphere at 600 °C. The baked product was found by X-ray powder diffraction to be a perovskite complex oxide single phase of $LaFeO_3$.

The perovskite complex oxide was found by thermogravimetry to have a weight decrease ratio of 27.4%.

Catalytic performance assessment

Pd was supported on the baked bodies of Examples 1 to 3 and Comparative Examples 1 and 2 as explained below and then assessed for catalytic performance.

(a) Pd support: A starting slurry was prepared by impregnating the baked body with an aqueous solution of palladium nitrate at a content of 2.0 wt.% as Pd. The starting slurry was maintained under reduced pressure in a rotary evaporator and evaporated to dryness over about 3 hours in a 110 °C oil bath, whereafter the dry product was heat-treated at 600 °C in an air atmosphere to obtain a Pd supported perovskite complex oxide.

(b) Pelletization: The baked body supporting Pd was crushed into a powder which was compressed in a pelletizer to obtain a 2 - 3 mm thick sheet that was granulated into 1 - 2 mm pellets by crushing and sifting.

(c) Catalytic activity assessment: The pellets were charged onto a circulating fixed bed to a volume of 3 cc and then contacted with the vehicle exhaust model gas (equivalent point composition) shown in Table 1 at a spatial velocity of 60,000/h and the HC concentration and CO concentration were measured at the outlet using an FIA-510 general-purpose gas analyzer unit (Horiba, Ltd.) and a VIA-510 general-purpose gas analyzer unit (Horiba, Ltd.), respectively.

During the measurement, the pellet temperature was raised from room temperature to 600 °C at a temperature increase rate of 10 °C/min and the temperatures (hereinafter called "T50") at which the HC and CO gas components reached a purification rate of 50% was determined as an index of activity. The results are shown in Table 2.

Table 1

| Component | NO | $O_2$ | CO | $H_2$ | $HC(C_3H_6)$ | $CO_2$ | $H_2O$ | $N_2$ |
|---|---|---|---|---|---|---|---|---|
| Content(%) | 0.12 | 0.646 | 0.7 | 0.233 | 0.0533 | 10 | 10 | Balance |

Table 2

| Composition | Example | Weight decrease ratio | T50 | |
|---|---|---|---|---|
| | | | CO | HC |
| $(La_{0.8}Sr_{0.2})FeO_3$ | Expl. 1 | 34.8% | 157 °C | 207 °C |
| | Comp. Expl. 1 | 24.6% | 176 °C | 207 °C |
| $LaFeO_3$ | Expl. 2 | 32.5% | 169 °C | 219 °C |
| | Comp. Expl. 2 | 27.4% | 184 °C | 222 °C |
| $(La_{0.8}Sr_{0.2})MnO_3$ | Exmpl. 3 | 33.8% | 165 °C | 202 °C |

As is clear from Table 2, the catalysts of the Examples that used perovskite complex oxides having a large weight decrease ratio of 30% or greater in the low-temperature region had lower T50, especially lower CO T50, than those of the Comparative Examples, thus demonstrating that they exhibited improved exhaust gas purification performance in the low-temperature region immediately after engine starting. In addition, they exhibited low-temperature purification performance with respect to HC that was equal to or better than that of the Comparative Example catalysts.

**Claims**

1. An exhaust gas purification catalyst obtained by supporting a noble metal element on a perovskite complex oxide wherein the perovskite complex oxide is one whose ratio of thermogravimetric weight decrease between 50 °C and 180 °C to thermogravimetric weight decrease between 50 °C and 1000 °C is not less than 30 %, and one that at the time of producing a perovskite ($RTO_3$) complex oxide phase by heat treating a precursor substance that is a powdery starting material containing at least one rare earth element R and at least one transition metal element T, there is used as the precursor substance an amorphous substance containing the R and T components at a content ratio required for producing the complex oxide.

2. An exhaust gas purification catalyst according to claim 1 wherein the amorphous substance is a precipitated substance obtained by precipitation from an aqueous solution containing R ions and T ions using a precipitant under the controlled conditions of pH 6-11.

**Patentansprüche**

1. Abgasreinigungskatalysator, der erhalten wird durch Tragen eines Edelmetallelements auf einem Perovskit-Komplex-Oxid, wobei das Perovskit-Komplex-Oxid ein solches ist, dessen Verhältnis thermografimetrischer Gewichtsverringerung zwischen 50°C und 180°C zu der thermografimetrischen Gewichtsverringerung zwischen 50°C und 1000°C nicht kleiner als 30% ist, und bei dem während des Zeitpunkts der Herstellung einer Perovskit-($RTO_3$)-Komplex-Oxid-Phase durch Wärmebehandlung einer Precursor-Substanz, die ein pulverförmiges Startmaterial ist, das wenigstens ein Seltenerdelement R und wenigstens ein Übergangsmetallelement T beinhaltet, als die Precursor-Substanz eine amorphe Substanz verwendet, welche die R- und T-Komponenten mit einem Inhaltsverhältnis aufweist, das notwendig ist zum Erzeugen des Komplex-Oxides.

2. Abgasreinigungskatalysator nach Anspruch 1, wobei die amorphe Substanz eine gefällte Substanz ist, die erhalten wird durch Fällung aus einer wässrigen Lösung, die R-lonen und T-lonen enthält, und zwar unter Verwendung eines Fällungsmittels unter den kontrollierten Bedingungen von pH 6-11.

**Revendications**

1. Catalyseur de purification de gaz d'échappement obtenu en faisant porter un élément métallique noble par un oxyde complexe pérovskite, dans lequel l'oxyde complexe pérovskite est tel que le rapport entre la diminution de poids thermo-gravimétrique entre 50°C et 180°C et la diminution de poids thermo-gravimétrique entre 50°C et 1000°C n'est pas inférieur à 30 %, et est tel qu'à l'instant de production d'une phase d'oxyde complexe pérovskite ($RTO_3$) par traitement thermique d'une substance servant de précurseur qui est un matériau de démarrage à l'état de poudre contenant au moins un élément de terre rare R et au moins un élément métallique de transition T, on utilise en tant que substance servant de précurseur une substance amorphe contenant les composants R et T dans un rapport de contenu requis pour produire l'oxyde complexe.

2. Catalyseur de purification de gaz d'échappement selon la revendication 1, dans lequel la substance amorphe est une substance de précipité obtenue par la précipitation d'une solution aqueuse contenant des ions R et des ions T en utilisant un précipitant dans des conditions de pH contrôlé de 6 à 11.

F i g. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 102016813 B
- JP 2620624 B
- JP 1877483 B
- JP 3222184 B
- JP 9086928 A
- JP 11169711 A
- JP 8012334 A
- JP 2004041866 A
- EP 1462428 A
- EP 0525677 A
- US 4921829 A
- US 4126580 A